# FASCICULE DE BREVET EUROPEEN

(11) **EP 1 790 976 B1**
(45) Date de publication et mention de la délivrance du brevet: **20.02.2008**
(21) Numéro de dépôt: 06291629.1
(22) Date de dépôt: 19.10.2006
(51) Int. Cl.: G01N 21/89, G01N 21/88

(54) **Procédé et dispositif optiques de détection de défauts de surface et de structure d'un produit chaud en défilement**
Optisches Verfahren und optische Vorrichtung zur Erkennung von Defekten der Oberfläche und der Struktur eines heißen, sich kontinuierlich bewegenden Produkts
Optical process and device for detection of surface and structural defects of a tapered hot product

(30) Priorité: 23.11.2005 FR 0511997
(43) Date de publication de la demande: 30.05.2007
(73) Titulaire: Siemens VAI Metals Technologies SAS, 42400 Saint Chamond (FR)
(72) Inventeur: Legoupil, Jean-Luc, 75008 Paris (FR)
(74) Mandataire: Bentz, Jean-Paul

(56) Documents cités:
- WO-A-02/25345
- FR-A- 2 768 510
- US-A- 4 215 273
- US-A- 4 759 072
- US-A- 5 373 182
- US-A- 5 654 977
- US-A- 5 690 430
- US-A1- 2004 125 228
- US-B1- 6 486 974

## Description

La présente invention a pour objet un procédé et un dispositif optiques de détection de défauts de surface et de structure d'un produit chaud en défilement, elle s'applique particulièrement aux produits métalliques pendant le laminage à chaud et aux produits métalliques plats à la sortie du laminoir à chaud.

Les produits métalliques sont obtenus, généralement à partir de brames et billettes élaborées en coulée continue et ensuite laminées à chaud dans une succession de cages de laminoir. Le laminage s'effectue à température élevée, généralement vers 1000 °C lorsqu'il s'agit d'acier. Mais l'invention peut s'appliquer également à des métaux non ferreux comme le cuivre ou l'aluminium, ainsi qu'à des matières plastiques.

La pratique de laminage de l'acier permet de réduire la section du produit tout en l'allongeant selon l'axe longitudinal qui est celui du défilement au cours du laminage. Cette méthode permet de donner au produit des propriétés mécaniques particulières avec une certaine isotropie axiale.

Mais le procédé n'est pas sans inconvénients pour la structure du produit, particulièrement des produits métalliques et surtout de l'acier. En effet des défauts d'origine différentes peuvent se retrouver associés dans la structure du produit, on peut avoir des défauts de surface causés par de la calamine qui reste accrochée à la surface du produit et qui provient de l'oxydation de la surface provoquée par le refroidissement à l'eau des cages de laminage. On peut aussi retrouver de la calamine incrustée à l'intérieur du produit. D'autres défauts peuvent provenir de difficultés rencontrées encore plus en amont, comme une mauvaise lubrification à la coulée de la brame ou un choc thermique lors du refroidissement. Ces aléas du procédé de fabrication peuvent générer des défauts de structure du métal qui pourront se trouver localisés à l'intérieur de l'épaisseur du produit aussi bien qu'à sa surface.

Il est donc important pour tous les produits de pouvoir détecter les défauts de surface et des défauts présents sous la surface. Lorsque l'on installe les dispositifs optiques de détection des défauts dans l'installation de laminage à chaud ceux-ci peuvent être détectés par l'observation de la lumière émise par le produit lui-même ou par celle issue d'une source d'éclairage auxiliaire et réfléchie par le produit. On connaît déjà, par exemple, des dispositifs optiques particulièrement développés pour détecter les défauts de surface des produits plats, utilisant des moyens d'éclairage de la surface et des moyens d'observation de la lumière réfléchie. L'observation de la lumière émise, dans le domaine de la lumière visible donne de bons résultats pour la détection des défauts de surface mais ne permet pas la détection des défauts localisés sous la surface. On a alors imaginé associer l'observation de la lumière émise par le produit, qui émet un rayonnement dans le domaine des infrarouges du fait de sa température, et celle qui est émise par un éclairage additionnel, généralement dans le domaine visible, et réfléchie par la surface du produit. Les défauts de surface sont les seuls détectés par réflexion de l'éclairage additionnel, et, en procédant par soustraction on peut détecter des défauts présents sous la surface car ils sont transmis par la lumière infrarouge émise par le coeur du produit.

Il se pose alors un problème optique bien connu qui est celui de l'aberration chromatique des lentilles. Il faut en effet pouvoir traiter les images prises avec les différentes lumières et les comparer, les défauts sous la surface étant issus du traitement de la différence entre les deux images. Pour cela on doit obtenir des images nettes et superposables.

Le problème de l'aberration chromatique est résolu de différentes manières dans les dispositifs classiques de prises de vues. Dans un dispositif de ce type le phénomène conduit à avoir des images nettes dans des plans focaux différents selon la longueur d'onde. Dans les appareils photographiques, par exemple, la combinaison de lentilles convergentes et de lentilles divergentes pour lesquelles le phénomène est inversé peut permettre de construire un plan focal image dans lequel les deux effets se trouvent annulés. On a alors une lentille dénommée lentille achromatique. On peut aussi utiliser le diaphragme pour augmenter la profondeur de champ. En effet l'objectif d'un appareil de prises de vue est calculé pour sa pleine ouverture, c'est-à-dire pour traiter les rayons lumineux arrivant sur toute sa surface. Si on ferme le diaphragme on limite de diamètre de l'ouverture du passage des rayons lumineux et l'objectif ne travaille que dans sa zone centrale pour laquelle les phénomènes sont réduits et la plage de netteté augmente.

Cette propriété est encore appelée profondeur de champ, cela signifie que la plage de distance pour laquelle l'image sera nette dans le plan focal image est agrandie. Mais il faut pour cela disposer de suffisamment de lumière et ce genre de dispositifs a été proposé par la société déposante pour la détection des défauts des produits sidérurgiques longs, qui sont étroits et génèrent donc une image concentrée contenant suffisamment de lumière. II en va autrement des produits plats dont la largeur de la dimension à observer est plus grande et dont la lumière est moins concentrée.

Il serait aussi possible de faire varier l'autre paramètre des prises de vues : le temps de pose. En effet ces dispositifs d'inspection automatique utilisent des caméras équipées de capteurs photosensibles fonctionnant avec un certain temps d'intégration. Cet artifice permet d'avoir un signal suffisant en cas de lumière faible. Mais le temps d'intégration est limité par la vitesse de défilement du produit à laquelle doit se faire l'observation tout en conservant une image nette. Or il se trouve qu'à l'heure actuelle les produits sidérurgiques plats ont des vitesses finales de laminage bien supérieures à celles des produits longs et peuvent atteindre 25 mètres par seconde. La solution n'est donc pas dans le temps d'intégration, car on veut aujourd'hui exploiter des appareils d'inspection automatique fonctionnant en ligne et à la vitesse de production, ceci afin de minimiser les coûts.

Pour résoudre ce problème de formation de l'image dans un plan focal différent selon la longueur d'onde, certains constructeurs d'appareils photographiques prévoient un fonctionnement dans l'infrarouge en déplaçant la bague de mise au point, une gravure souvent de couleur rouge est présente sur la bague de mise au point des objectifs. Une formule empirique de calcul de ce déplacement donne un décalage de 0,0025 fois la distance focale. Mais en fait cela dépend de la plage de longueur d'onde utilisée. La formule, bien connue de l'homme du métier, permet de passer de la lumière visible à une certaine plage de lumière infrarouge. Mais il en existe une gamme très étendue. En effet la plage visible va de 0,4 micromètre à 0,7 micromètre, il existe une plage de proche infrarouge entre 0,7 et 3 micromètres, une plage moyenne entre 3 et 25 micromètres et une plage lointaine entre 25 et 100 micromètres. Tout dépend du rayonnement du corps à observer, donc de sa température. En ce qui concerne les produits plats en acier à la sortie du laminoir à chaud la température dépend de la nature de l'acier fabriqué. Le développement incessant de nouvelles nuances d'acier demande un contrôle thermique très précis au cours du laminage à chaud et à la sortie du laminoir jusqu'au bobinage des bandes, en particulier pour les aciers dont la plasticité dépend de leur déformation et qui comportent des phases à l'état métastable. La température de sortie peut alors varier de façon courante aujourd'hui entre 900°C et 600°C ou moins. On a donc intérêt à concevoir un dispositif qui puisse aussi fonctionner avec la lumière infrarouge lointaine.

De plus les méthodes proposées par les constructeurs d'appareils photographiques permettent de passer de la lumière visible à une plage de lumière infrarouge mais pas d'obtenir la mise au point pour deux images issues des deux lumières simultanément. Une autre solution serait alors d'utiliser deux caméras mais la solution serait beaucoup plus onéreuse, d'autant que l'on dispose de façon courante de caméras couleurs à trois barrettes pour les trois composantes rouge, vert et bleu des images habituelles de cinéma et de télévision, et qu'il est commode d'utiliser une barrette dans l'infrarouge en installant simplement le filtre adéquat. De plus le procédé requiert la superposition des images pour le traitement des contrastes par différence et cette étape du procédé serait rendue beaucoup plus difficile à réaliser à partir d'images obtenues à partir de caméras et d'objectifs différents.

Le document US-A-4 759 072 divulgue un dispositif de détection de défauts dans une bande d'acier chauffée utilisant des capteurs de lumière visible et infrarouge.

La présente invention vise à résoudre tous ces problèmes par un procédé qui permet l'observation simultanée des défauts de surface et des défauts présents sous la surface sur des produits chauds en permettant la mise au point simultanée des images acquises à l'aide de la lumière infrarouge émise par le produit et de la lumière visible d'un éclairage additionnel, réfléchie par la surface du produit.

Selon le procédé de l'invention la détection des images du produit chaud (S) constituées pour une partie par de la lumière dont la longueur d'onde est dans le domaine infrarouge et pour une autre partie par de la lumière dont la longueur d'onde est dans le spectre visible est assurée par plusieurs capteurs linéaires (C1, C2, C3), chacun d'eux étant associé à la détection d'une image, installés dans la même caméra (4) et utilisant le même objectif (L), leur axe respectif étant parallèle à la ligne de visée (V', V), les dits capteurs étant situés chacun dans un plan focal différent (P_{B}, P_{G}, P_{R}) associé à chaque plage de longueur d'onde de manière à obtenir des images superposables. Toujours selon l'invention les plans focaux (P_{B}, P_{G}, P_{R}) des différents capteurs (C1, C2, C3) sont décalés par rapport à l'objectif (L) d'une distance correspondant à la correction de l'aberration chromatique de l'objectif pour les différentes longueurs d'onde utilisées pour la formation et la détection de chaque image.

De façon préférentielle, et selon le procédé de l'invention, la lumière constituant la partie des images dont la longueur d'onde est dans le domaine infrarouge est la lumière émise par le produit chaud (S) lui-même au cours du défilement.

Selon l'invention la lumière constituant la partie des images dont la longueur d'onde est dans le domaine visible est une lumière d'éclairage additionnelle de couleur jaune, verte ou bleue envoyée sur la surface du produit en défilement. De manière avantageuse la couleur de cette lumière additionnelle d'éclairage est verte.

Selon le procédé de l'invention les images détectées par les capteurs CCD sont analysées en niveau de gris, l'acquisition de ces images est synchronisée entre elles et avec l'avance du produit (S) en cours de défilement de façon à pouvoir localiser les défauts détectés par rapport à la longueur du produit (S).

Dans le dispositif de l'invention les capteurs sensibles (C1, C2, C3) à chaque spectre lumineux sont des capteurs linéaires, installés dans une même caméra (4), leur axe respectif étant parallèle à la ligne de visée (V', V), et dans des plans focaux (P_{B}, P_{G}, P_{R}) différents, pour cela ils sont installés sur un support (Q) incliné par rapport à l'axe (X'X) optique de l'objectif (L) de la caméra (4).

Selon un autre mode de réalisation de l'invention les capteurs sensibles (C1, C2, C3) sont installés sur un support étagé (7), de manière à être décalés selon la direction de l'axe optique (X'X) de l'objectif (L) de la caméra (4) et se trouver dans des plans focaux (P_{B}, P_{G}, P_{R}) différents.

Le dispositif de l'invention comporte des moyens d'éclairage additionnels (2) permettant de projeter une lumière de couleur jaune, verte ou bleue sur la surface du produit (S).

Dans le dispositif de l'invention les moyens d'éclairage additionnels (2) de couleur jaune verte ou bleue sont constitués de diodes électroluminescentes.

Selon un mode préférentiel de réalisation de l'invention le dispositif (1) de détection de défauts comporte des moyens de protection (3) et des moyens de refroidissement (6) des moyens d'acquisition des images.

Selon un mode de réalisation particulièrement avantageux de l'invention les moyens d'éclairage additionnels (2) sont intégrés dans les mêmes moyens de protection (3) que les moyens d'acquisition des images.

Mais l'invention sera mieux comprise par la description de différents modes de réalisation.
- La figure 1 illustre le problème résolu par l'invention.
- La figure 2 est une vue générale du dispositif de l'invention.
- La figure 3 illustre le procédé de l'invention.
- La figure 4 est un schéma d'un mode de réalisation de l'invention.
- La figure 5 est un schéma d'un autre mode de réalisation du dispositif de l'invention.

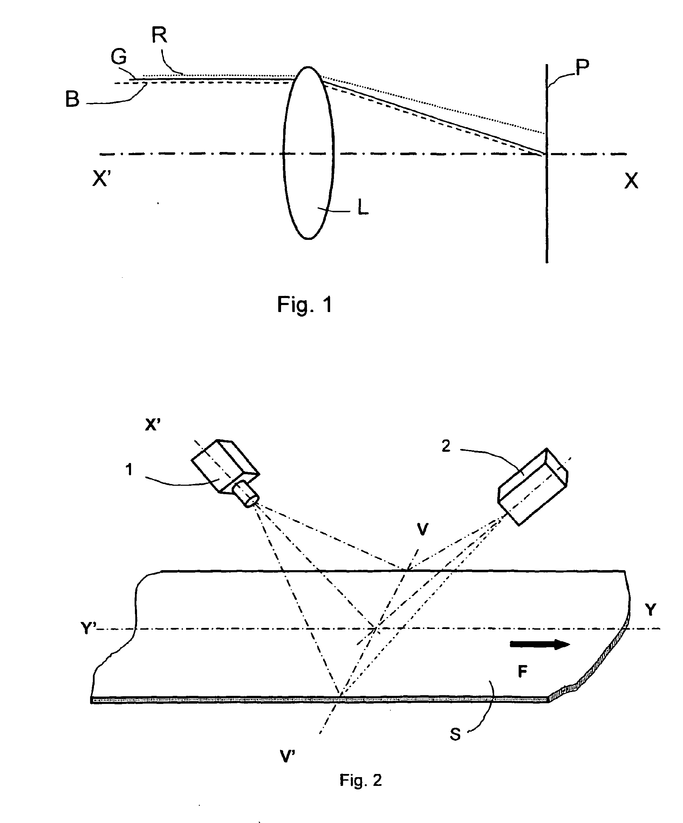

Selon l'invention représentée sur la figure 2 le dispositif 1 de détection des défauts
est orienté selon son axe optique X'X en direction du produit en défilement S. On a représenté un produit plat car c'est le cas préférentiel pour l'application de l'invention, mais elle peut s'appliquer à des produits dont la section a d'autres formes et d'autres dimensions.

De nombreux systèmes utilisent le traitement des images issues du produit lui-même qui rayonne une lumière infra rouge lorsqu'il est chaud. D'autres systèmes utilisent des appareils d'éclairage auxiliaires 2 pour illuminer la surface du produit à observer et traitent les images issues de cet éclairage, en général situé dans le rayonnement visible, et réfléchi par la surface du produit à observer. De manière à pouvoir détecter les défauts de surface et aussi des défauts de structure situés sous la surface le procédé de l'invention traite des images issues des deux sortes de source de lumière. D'une manière pratique on peut équiper le dispositif 1 du système d'éclairage 2 du produit S en défilement dans la direction F.

Dans le dispositif de l'invention on utilise dans la caméra des capteurs CCD linéaires, la caméra permet donc d'observer le produit selon une ligne de visée V'V qui représente une bande éclairée par le dispositif d'illumination 2 qui peut être séparé ou intégré au dispositif de détection 1. Dans le cas d'un produit plat la surface du produit est assez étendue et le procédé de mise au point consistant à augmenter la profondeur de champ par la fermeture du diaphragme ne peut être utilisé car la lumière a une intensité insuffisante, ou bien cela conduirait à des dispositifs d'illumination 2 plus puissants donc plus coûteux et plus encombrants. Il n'est pas possible non plus d'utiliser des temps de pose, ou d'intégration, longs car la vitesse de défilement du produit est élevée. Or il est impératif de résoudre le problème de la mise au point dans un plan focal image différent pour les deux types de lumière, car le traitement des défauts, selon le procédé de l'invention, se fait en particulier par superposition et comparaison des images.

La figure 1 illustre le phénomène de l'aberration chromatique des lentilles. On a représenté pour simplifier une simple lentille convergente L qui donne une image nette d'un objet situé à l'infini dans un plan focal image P. On installe le dispositif sensible, plaque photographique ou capteur, dans ce plan focal et on fait la mise au point en déplaçant la lentille L. Il est aussi possible de garder la lentille fixe et de déplacer le plan focal P. Une lentille produit une réfraction des rayons lumineux à la frontière de la matière qui la constitue avec l'atmosphère ambiante. La forme géométrique particulière que l'on donne à cette surface de séparation lui donne les propriétés particulières de convergence, de divergence ou autres.

Une lentille se comporte aussi comme un prisme et possède la propriété de décomposer la lumière. Ses propriétés seront différentes pour les différentes longueurs d'onde contenues dans la lumière qui la traverse. Selon ce phénomène il est connu que plus la longueur d'onde de la lumière est courte et plus la déviation est importante. Sur la figure 1 on a représenté en trait plein le trajet d'un rayon lumineux correspondant à la lumière verte G, en trait point tiré celui d'un rayon correspondant à la lumière bleue B, donc dévié d'avantage par la lentille L, et en trait pointillé le trajet d'un rayon lumineux situé dans l'infrarouge R. Si on construit le dispositif optique et que l'on fait la mise au point dans le plan P pour la gamme des longueurs d'onde visibles, l'image infrarouge de l'objet qui rayonne aussi dans cette autre gamme se formera à l'arrière de ce plan focal P puisque les rayons sont moins déviés, cette deuxième image ne sera pas nette et ne sera pas superposable à la première.

Dans le cas général il n'y a pas de solution au problème de la mise au point, hormis celles déjà citées, mais la société déposante a observé que l'objet dont on veut enregistrer les images est un objet linéaire. En effet la détection des défauts se fait sur une zone relativement étroite du produit S en défilement et orientée selon la ligne de visée V'V. Cette zone correspond approximativement à la zone de l'illumination faite à l'aide du dispositif d'éclairage auxiliaire 2. L'image formée est donc aussi linéaire et il est courant d'utiliser pour ce type d'images des capteurs sensibles linéaires plutôt que matriciels puisque les images à enregistrer sont linéaires. En effet si l'on enregistre à fréquence suffisamment élevée des images linéaires dont la taille est au moins égale à la largeur du produit on réalise un échantillonnage de ladite surface et il est possible d'en reconstituer des images à l'aide d'un traitement numérique en connaissant la vitesse de défilement. C'est un principe bien connu des scanners.

Or l'ensemble du dispositif optique de détection 1 présente une symétrie générale cylindrique autour de l'axe optique X'X. On dispose donc en fait dans le plan focal image P d'une multiplicité de positions possible pour les capteurs sensibles, positions dans lesquelles se forme l'image à enregistrer. Le principe du procédé de l'invention est donc d'exploiter cette possibilité en installant plusieurs capteurs sensibles, de les associer chacun à la détection d'une image formée par de la lumière dont la longueur d'onde est dans une plage différente, et de décaler la position du capteur sensible dans la direction de l'axe focal et selon la longueur d'onde de la lumière formant l'image à détecter. Ceci permet d'avoir une mise au point correcte malgré le phénomène d'aberration chromatique et des images issues de lumières différentes et néanmoins superposables.

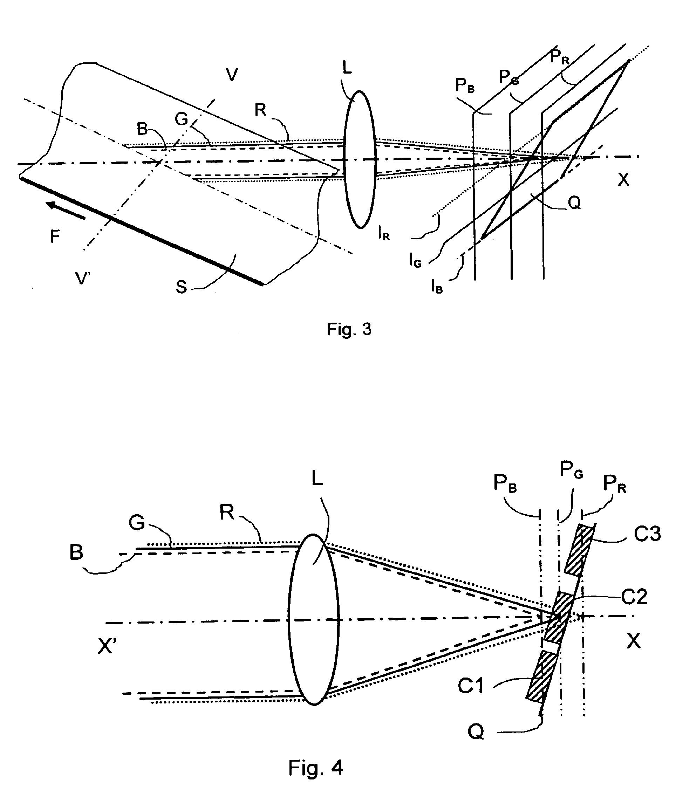

La figure 3 illustre le procédé de l'invention. Le produit S en défilement à observer est illuminé selon la ligne de visée V'V. Cette zone est éclairée par le dispositif d'éclairage auxiliaire 2, par ailleurs le produit S est à une température suffisante pour émettre de la lumière infrarouge, et ceci indépendamment de la zone observée.

Le dispositif d'observation 1 est orienté en direction de la ligne médiane du produit S selon son axe optique X'X, incliné par rapport au plan de défilement de la bande. L'objectif du dispositif 1 a été symbolisé par une lentille convergente L qui permet de former des images dans les différents plans focaux images P_{B}, P_{G} et P_{R} selon la gamme de longueur d'onde de la lumière qui les forme. Dans les installations industrielles la bande S est en général située de façon à défiler dans un plan sensiblement horizontal. Dans chaque plan focal image se forme une image de la ligne de visée horizontale, ou du moins parallèle à la ligne de visée objet V'V. Il suffit d'installer un capteur sensible dans le plan P_{B} et dans une position quelconque mais choisie par rapport à la distance à l'axe optique pour détecter l'intégralité de l'image de la ligne de visée V'V. En effet la zone illuminée est une bande dont l'image est aussi une bande dans les plans focaux. Les capteurs linéaires peuvent être disposés à un endroit quelconque à l'intérieur de cette bande image, et en enregistrant des images successives on pourra reconstituer une image numérique de la surface du produit S. Si on équipe ce capteur d'un filtre de couleur bleue on aura une image I_{B} de la ligne de visée pour une longueur d'onde correspondant à la couleur bleue.

On peut de même installer un capteur sensible équipé un filtre de couleur verte dans le plan focal image P_{G} pour obtenir une image nette I_{G} de la ligne de visée V'V pour la longueur d'onde correspondant à la couleur verte. Il en est de même pour la lumière infrarouge, un capteur sensible équipé d'un filtre infrarouge installé dans le plan focal P_{R} permettra d'obtenir une image I_{R} de la ligne de visée V'V dans la gamme des longueurs d'onde infrarouge, c'est-à-dire dans le cadre de l'invention, formée par de la lumière issue du produit S lui-même.

D'une manière pratique il faut choisir une position pour chaque capteur à une certaine distance de l'axe optique pour utiliser l'espace disponible de part et d'autre de l'axe optique X'X en fonction de l'encombrement des capteurs choisis. Il est commode de définir un plan Q contenant les positions retenues pour les images I_{B}, I_{G} et I_{R}, orientées selon une direction orthogonale à l'axe de la bande S et contenues chacune dans leur plan focal respectif P_{B}, P_{G} et P_{R}. Ce plan Q est incliné par rapport à l'axe optique X'X et peut servir à un support qui permettra la disposition des capteurs sensibles.

La formule empirique connue de l'homme du métier donne une correction par un décalage relatif de la lentille L par rapport au plan focal P dont la valeur est égale à 0,0025 fois la distance focale de l'objectif et la société déposante a pu vérifier au cours de ses expérimentations que cette valeur permettait une mise au point correcte pour ses appareils de détection de défauts. Les optiques couramment utilisées dans le dispositif de l'invention ayant une distance focale de 50 millimètres la correction à apporter est de 0,0025x50 = 0,125 millimètres soit 125 micromètres. Compte tenu des barrettes de capteurs utilisées il est possible d'obtenir le décalage voulu entre les longueurs d'onde extrêmes en installant un support incliné à 30° par rapport à l'axe optique. Ces valeurs tout à fait classiques dans les appareils d'optique rendent la construction du dispositif 1 parfaitement réalisable de manière industrielle. De plus la perte de luminosité entraînée par l'inclinaison du capteur est tout à fait acceptable. En effet le flux lumineux est atténué d'une valeur voisine de la valeur du cosinus de l'angle d'inclinaison du plan de pose du capteur soit cos 30° = 0, 87 ce qui correspond à moins de 1 diaphragme et est une valeur tout à fait acceptable vis-à-vis de la perte de luminosité.

La figure 4 représente très schématiquement un mode de réalisation de l'invention. Dans cette représentation les faisceaux lumineux provenant de la zone de la ligne de visée ont été grossis pour faciliter la compréhension du principe de l'invention. Les capteurs ont aussi été agrandis pour une bonne lisibilité du dessin et ne sont pas représentés à l'échelle. Le faisceau de lumière provenant de la zone de visée et contenant les couleurs visibles B, G et infrarouge R entrent sur l'optique du dispositif 1 représenté par une lentille convergente L. Les images de la ligne de visée V'V se forment dans les plans P_{B}, P_{G} et P_{R} selon la couleur de la lumière. On dispose un support pour les capteurs C1, C2 et C3 incliné sur l'axe optique selon le plan Q. Ces capteurs sont situés à une distance différente de l'axe optique, bien entendu ils se trouvent tous dans la zone de l'image de la bande éclairée entourant la ligne de visée V'V. Selon un mode préférentiel de réalisation du dispositif de l'invention les capteurs sont des capteurs linéaires CCD, encore dénommés « à transfert de charges » et largement utilisés aujourd'hui en imagerie numérique. D'une manière pratique on utilise une caméra linéaire couleur à capteurs CCD équipée de façon standard de trois barrettes de capteurs correspondant aux trois couleurs fondamentales des images couleurs habituelles.

Selon l'invention on utilise au moins deux des barrettes d'une caméra de ce type et on équipe chacune d'un filtre particulier. Ainsi les barrettes C1, C2 et C3 de cellules sensibles CCD sont précédées de filtres couleur respectivement F1, F2 et F3 l'un laissant passer uniquement les longueurs d'onde infra rouge, les autres ne laissant passer uniquement la longueur d'onde de la lumière additionnelle située dans le domaine visible et de la couleur choisie. Ce dispositif de l'invention permet de différencier l'acquisition d'une image issue de lumière infrarouge, et l'acquisition d'une image issue de la lumière provenant du dispositif d'éclairage additionnel, et de les séparer, chacune sur une barrette différente, tout en permettant l'acquisition simultanée des deux images. Ces images sont analysées en tons de gris et présentent, au niveau des défauts d'aspect et de composition du produit, des zones localisées qui peuvent être différentes, car elles peuvent correspondre à des défauts de surface ou des défauts sous la surface.

Des algorithmes connus de traitement d'image installés dans un calculateur permettent par des déterminations et comparaisons des contours et des contrastes, d'établir une cartographie du pourtour du produit. On utilisera, selon le procédé de l'invention au moins deux barrettes de capteurs sensibles, l'une travaillant dans le domaine infra rouge et l'autre dans le domaine visible pour enregistrer les images obtenues avec le dispositif d'éclairage additionnel 2. Mais on pourra selon les besoins utiliser la troisième barrette disponible dans une plage de longueur d'onde déterminée pour augmenter les capacités de détection du système et sans sortir du domaine de l'invention.

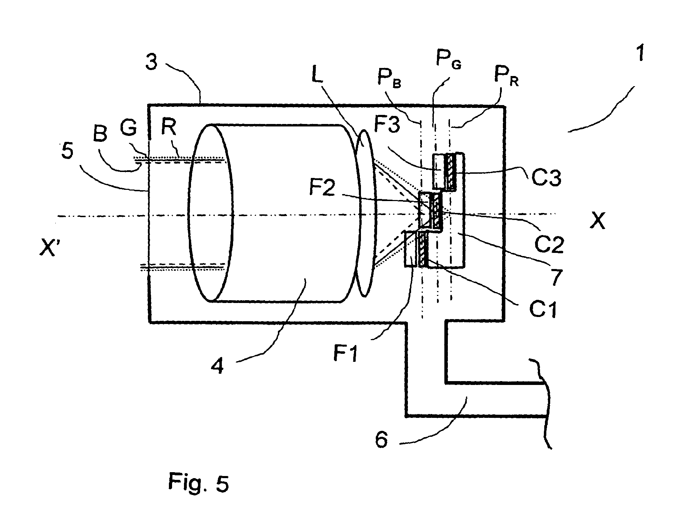

Selon un mode de réalisation perfectionné de l'invention on peut aussi obtenir un décalage des plans focaux sans provoquer d'atténuation, même minime, du flux lumineux. Ce mode de réalisation est représenté sur la figure 5 qui montre aussi de manière plus complète l'ensemble de la réalisation d'un dispositif selon l'invention.
Le dispositif 1 de détection des défauts est orienté selon l'axe optique X'X en direction de la partie médiane de la bande à observer. L'ensemble 1 est protégé par un coffret 3 rigide et de préférence métallique de façon à pouvoir être installé dans l'environnement sévère d'une ligne de production à chaud telle qu'une ligne de laminage et à proximité immédiate du produit. Le coffret 3 est étanche et complètement fermé, il est refroidi et ventilé par un soufflage d'air à l'aide du conduit 6. Une fine zone transparente 5 située sur la face avant du coffret 3 permet de recevoir les lumières émises par réflexion et diffusion naturelle en provenance du produit à observer S. L'ensemble de la caméra 4 comporte un objectif schématisé sur la figure 5 par la lentille convergente L et des capteurs sensibles C1, C2 et C3 montés en barrettes. On a représenté un mode de réalisation de l'invention utilisant les trois barrettes d'une caméra couleur standard, mais, comme il a déjà été dit, le procédé de l'invention peut être mis en oeuvre en utilisant au minimum deux barrettes.

La lumière schématisée par les rayons des couleurs bleue B, verte G et infrarouge R pénètre dans la caméra 4. A la distance focale de la lentille L se forment des plans images P_{B}, P_{G} et P_{R} décalés selon les longueurs d'onde utilisées. Un support 7 pour les barrettes est ménagé avec des espaces décalés en forme de marches d'escalier, de la distance nécessaire aux différentes mises au point pour recevoir les capteurs C1, C2 et C3. Les capteurs sont chacun équipés d'un filtre F1, F2 et F3 de la couleur que l'on veut utiliser pour former une image.

A titre d'exemple, non limitatif, si l'on veut concevoir un dispositif de détection des défauts fonctionnant dans la lumière infrarouge émise par le produit et dans la lumière, par exemple verte, d'un éclairage auxiliaire, on équipera la caméra 4 de deux barrettes de capteurs C1 et C2 équipés d'un filtre vert F1 pour le capteur C1 et d'un filtre infrarouge F2 pour le capteur C2. Le support 7 comportera deux niveaux usinés avec un décalage donné par la formule de Kodak, soit 125 micromètres pour un objectif dont la distance focale serait de 50 millimètres.

Dans tous ces dispositifs les caméras sont reliées à des dispositifs interfaces d'acquisition d'images, de synchronisation et des calculateurs de traitement d'images comportant des logiciels de reconnaissance de forme et de contraste, ainsi qu'à des unités de stockage non représentés sur les figures. Tous ces dispositifs ont fait l'objet de descriptions dans d'autres demandes de brevets et il n'est pas nécessaire de les reprendre ici.

Selon le procédé de l'invention, la caméra 4 peut détecter, grâce à la correction de l'aberration chromatique de l'objectif, des images nettes et superposables de la zone du produit à observé situé le long de la ligne de visée V'V. Ensuite les signaux des cellules photos électriques constituant les capteurs CCD sont analysés en niveaux de gris et les images provenant de l'émission faite par le produit et de la réflexion faite par sa surface sont comparées. Les résultats sont stockés et comparés à des images de références situées dans une mémoire bibliothèque de défauts de manière à pouvoir signaler de façon explicite un certain nombre de types de défauts.

Bien entendu l'invention ne se limite pas au mode de réalisation qui vient d'être décrit à titre d'exemple et peut s'appliquer à la détection de défauts de produits en acier ou constitués d'un autre métal et de différentes formes sans sortir du cadre de l'invention.

L'invention peut aussi s'appliquer à tout produit d'une autre matière ou élaboré par un autre procédé que le laminage, comme par exemple l'extrusion de matières plastiques à chaud.

Il est aussi possible d'utiliser d'autres dispositions des cellules CCD, des optiques et des filtres de manière à corriger l'aberration chromatique des lentilles pour réaliser l'acquisition d'images nettes et superposables issues de lumières situées dans au moins deux bandes de longueur d'ondes différentes sans sortir du domaine de l'invention.

On pourra aussi utiliser différents types de capteurs photosensibles sans sortir du domaine de l'invention.

Il est enfin possible d'imaginer l'utilisation d'autres algorithmes de reconnaissance, traitement et comparaison d'images que ceux évoqués précédemment, comme par exemple ceux utilisés pour le traitement des images de cinéma et de télévision pour les effets spéciaux ou la colorisation des images en noir et blanc sans sortir du champ de protection donné par les revendications.

Les signes de référence insérés après les caractéristiques techniques mentionnées dans les revendications, ont pour seul but de faciliter la compréhension de ces dernières et n'en limitent aucunement leur portée.

## Revendications

1. Procédé optique de détection des défauts de produits métalliques pendant un laminage à chaud (S), utilisant pour la détection simultanée de défauts situés sur la surface et sous la surface du produit, la formation et le traitement d'images du produit constituées pour une partie par de la lumière dont la longueur d'onde est dans le domaine infrarouge et pour une autre partie par de la lumière dont la longueur d'onde est dans le spectre visible, le procédé comprenant une étape de fourniture d'un signal de détection de défauts assurée par plusieurs capteurs linéaires (C1, C2, C3), chacun d'eux étant associé à la détection d'une image, installés dans une même caméra (4) et utilisant le même objectif (L), leur axe respectif étant parallèle à la ligne de visée (V', V), les dits capteurs étant situés chacun dans un plan focal différent (P_{B}, P_{G}, P_{R}) associé à chaque plage de longueur d'onde de manière à obtenir des images superposables, et une étape de transmission du signal de détection de défauts à des moyens de traitement d'images.

2. Procédé optique de détection des défauts d'un produit chaud en défilement (S), selon la revendication 1 **caractérisé en ce que** les plans focaux (P_{B}, P_{G}, P_{R}) des différents capteurs sont décalés par rapport à l'objectif (L) d'une distance correspondant à la correction de l'aberration chromatique de l' objectif pour les différentes longueurs d'onde utilisées pour la formation et la détection de chaque image.

3. Procédé optique de détection des défauts d'un produit chaud en défilement (S) selon l'une des revendications 1 ou 2 **caractérisé en ce que** la lumière constituant la partie des images dont la longueur d'onde est dans le domaine infrarouge est la lumière émise par le produit chaud (S) lui-même au cours du défilement.

4. Procédé optique de détection des défauts d'un produit chaud en défilement (S) selon l'une des revendications 1 à 3 **caractérisé en ce que** la lumière constituant la partie des images dont la longueur d'onde est dans le domaine visible est une lumière d'éclairage additionnelle de couleur jaune, verte ou bleue envoyée sur la surface du produit en défilement.

5. Procédé optique de détection des défauts d'un produit chaud en défilement (S) selon la revendication 4 **caractérisé en ce que** la lumière d'éclairage additionnelle est de couleur verte.

6. Procédé optique de détection des défauts d'un produit chaud en défilement (S) selon l'une des revendications 1 à 5 **caractérisé en ce que** les lumières issues des dispositifs de détection sont analysées en niveaux de gris.

7. Procédé optique de détection des défauts d'un produit chaud en défilement (S) selon la revendication 8 **caractérisé en ce que** l'acquisition des images est synchronisée entre elles et avec l'avance du produit en cours de défilement de façon à pouvoir localiser les défauts détectés par rapport à la longueur du produit (S).

8. Dispositif optique (1) de détection des défauts d'un produit chaud (S) en défilement comportant des moyens de formation, de détection (C1, C2, C3) et de traitement d'images du produit, permettant l'analyse d'images constituées par de la lumière dont le spectre de longueur d'onde se situe pour une partie dans le domaine de l'infrarouge, et pour une autre partie dans le domaine visible, les capteurs (C1, C2, C3) sensibles à chaque spectre lumineux étant des capteurs linéaires, installés dans une même caméra (4) et utilisant le même objectif (L), leur axe respectif étant parallèle à la ligne de visée (V', V), les dits capteurs étant situés dans des plans focaux (P_{B}, P_{G}, P_{R} ) différents et fournissant un signal de détection de défauts aux moyens de traitement d'images.

9. Dispositif optique (1) de détection des défauts d'un produit chaud (S) en défilement selon la revendication 8, **caractérisé en ce que** les capteurs sensibles (C1, C2, C3) aux différents spectres de longueur d'onde sont installés sur un support incliné (Q) par rapport à l'axe optique (X'X) de l'objectif (L) de la caméra (4).

10. Dispositif optique (1) de détection des défauts d'un produit chaud (S) en défilement selon la revendication 8, **caractérisé en ce que** les capteurs sensibles (C1, C2, C3) aux différents spectres de longueur d'onde sont installés sur un support étagé (7), de manière à être décalés selon la direction de l'axe optique (X'X) de l'objectif (L) de la caméra (4).

11. Dispositif optique (1) de détection des défauts d'un produit chaud (S) en défilement selon l'une des revendications 8 à 10, **caractérisé en ce que** les moyens de formation, de détection et de traitement d'images du produit associent la lumière infrarouge émise par le produit (S) lui-même et celle émise par des moyens d'éclairage additionnels (2), de couleur jaune, verte ou bleue et projetée sur la surface du produit en défilement.

12. Dispositif optique de détection des défauts d'un produit chaud en défilement selon la revendication 11, **caractérisé en ce que** la lumière émise par les moyens d'éclairage additionnels (2) est de couleur verte.

13. Dispositif optique (1) de détection des défauts d'un produit chaud (S) en défilement selon l'une des revendications 11 ou 12, **caractérisé en ce que** les moyens d'éclairage additionnels (2) sont constitués de diodes électroluminescentes.

14. Dispositif optique (1) de détection des défauts d'un produit chaud (S) en défilement selon l'une quelconque des revendications précédentes **caractérisé en ce qu**'il comporte des moyens de protection (3) et des moyens de refroidissement (6) des moyens d'acquisition des images.

15. Dispositif optique (1) de détection des défauts d'un produit chaud (S) en défilement selon la revendication 14 **caractérisé en ce que** les moyens d'éclairage (2) sont intégrés dans les mêmes moyens de protection (3) que les moyens d'acquisition des images (4).

## Claims

1. An optical method for detecting defects of metal products during hot-rolling (S), using for simultaneously detecting defects located on the surface and under the surface of the product, the formation and processing of images of the product, formed for one part by light for which the wavelength is in the infrared region and for another part by light for which the wavelength is in the visible spectrum, comprising a step for providing a signal of detection of defects, provided by several linear sensors (C1, C2, C3), each of them being associated with the detection of an image, set up in a same camera (4) and using the same objective (L), their respective axes being parallel to the line of sight (V', V), said sensors being each located in a different focal plane (P_{B}, P_{G}, P_{R}) associated with each wavelength range in order to obtain superposable images, and a step of transmitting the defect detection signal to image processing means.

2. The optical method for detecting defects of a hot travelling product (S), according to claim 1, **characterized in that** the focal planes (P_{B}, P_{G}, P_{R}) of the different sensors are shifted relatively to the objective (L) by a distance corresponding to the correction of the chromatic aberration of the objective for the different wavelengths used for forming and detecting each image.

3. The optical method for detecting defects of a hot travelling product (S) according to any of claims 1 or 2, **characterized in that** the light forming the portion of the images for which the wavelength is in the infrared region is the light emitted by the hot product (S) itself during its travel.

4. The optical method for detecting defects of a hot travelling product (S) according to any of claims 1 to 3, **characterized in that** the light forming the portion of the image for which the wavelength is in the visible region is an additional illumination light of yellow, green or blue colour sent onto the surface of the travelling product.

5. The optical method for detecting defects of a travelling hot product (S) according to claim 4, **characterized in that** the additional illumination light is of green colour.

6. The optical method for detecting defects of a travelling hot product (S) according to any one of claims 1 to 5, **characterized in that** the lights stemming from the detection devices are analyzed in grey levels.

7. The optical method for detecting defects of a travelling hot product (S) according to claim 6, **characterized in that** the acquisition of the images is synchronized among them and with the progress of the travelling product, so as to be able to localize the detected defects relatively to the length of the product (S).

8. An optical device (1) for detecting the defects of a travelling hot product (S) including means for forming, detecting (C1, C2, C3) and processing images of the product, allowing for analysis of images formed by the light for which the wavelength spectrum is for one part located in the infrared region, and for another part in the visible region, the sensors (C1, C2, C3) sensitive to each light spectrum being linear sensors, set up in a same camera (4) and using the same objective (L), their respective axes being parallel to the line of sight (V', V), said sensors being located in different focal planes (P_{B}, P_{G}, P_{R}) and providing a defect detection signal to the image processing means.

9. The optical device (1) for detecting the defects of a travelling hot product (S) according to claim 8, **characterized in that** the sensors (C1, C2, C3) sensitive to the different wavelength spectra are set up on a support (Q) tilted relatively to the optical axis (X'X) of the objective (L) of the camera (4) .

10. The optical device (1) for detecting the defects of a travelling hot product (S) according to claim 8, **characterized in that** the sensors (C1, C2, C3) sensitive to the different wavelength spectra are set up on a staged support (7) so as to be shifted along the direction of the optical axis (X' X) of the objective (L) of the camera (4).

11. The optical device (1) for detecting the defects of a travelling hot product (S) according to any of claims 8 to 10, **characterized in that** the means for forming, detecting and processing images of the product associate the infrared light emitted by the product (S) itself and the light emitted by additional illumination means (2) of yellow, green or blue colour, and projected onto the surface of the travelling product.

12. The optical device (1) for detecting the defects of a travelling hot product according to claim 11, **characterized in that** the light emitted by the additional illumination means (2) is of green colour.

13. The optical device (1) for detecting the defects of a travelling hot product (S) according to any of claims 11 or 12, **characterized in that** the additional illumination means (2) consist of light emitting diodes.

14. The optical device (1) for detecting the defects of a travelling hot product (S) according to any of the preceding claims, **characterized in that** it includes protection means (3) and cooling means (6) of the image acquisition means.

15. The optical device (1) for detecting the defects of a travelling hot product (S) according to claim 14, **characterized in that** the illumination means (2) are integrated into the same protection means (3) as the image acquisition means (4).

## Patentansprüche

1. Optisches Verfahren zum Erkennen von Defekten bei Metallerzeugnissen während eines Warmwalzvorgangs (S), wobei für die gleichzeitige Erfassung von Defekten an und unter der Oberfläche des Erzeugnisses die Abbildung und die Verarbeitung von Bildern des Erzeugnisses verwendet werden, die zu einem Teil aus Licht, dessen Wellenlänge im Infrarot-Bereich liegt, und zu einem weiteren Teil aus Licht bestehen, dessen Wellenlänge im sichtbaren Spektrum liegt,
wobei das Verfahren einen Schritt zum Bereitstellen eines Defekterfassungssignals umfasst, der über mehrere lineare Sensoren (C1, C2, C3) erfolgt, wobei jeder Sensor der Erfassung eines Bildes zugeordnet ist, in einer gleichen Kamera (4) eingebaut ist und das gleiche Objektiv (L) verwendet, wobei deren jeweilige Achse parallel zur Sichtlinie (V', V) verläuft, wobei die Sensoren jeweils in einer unterschiedlichen Brennebene (P_{B}, P_{G}, P_{R}) liegen, die jedem Wellenlängenbereich zugeordnet ist, so dass übereinanderlegbare Bilder erhalten werden, sowie einen Schritt zum Übertragen des Defekterfassungssignals zu Bildverarbeitungsmittel.

2. Optisches Verfahren zum Erkennen von Defekten eines vorbeilaufenden Warmerzeugnisses (S) nach Anspruch 1, **dadurch gekennzeichnet, dass** die Brennebenen (P_{B}, P_{G}, P_{R}) der verschiedenen Sensoren bezüglich des Objektivs (L) in einem Abstand versetzt sind, welcher der Korrektur der Farbabweichung des Objektivs bei verschiedenen Wellenlängen entspricht, die für die Abbildung und die Erfassung eines jeden Bildes verwendet werden.

3. Optisches Verfahren zum Erkennen von Defekten eines vorbeilaufenden Warmerzeugnisses (S) nach einem der Ansprüche 1 oder 2, **dadurch gekennzeichnet, dass** das den Teil der Bilder mit der Wellenlänge im Infrarotbereich bildende Licht das von dem Warmerzeugnis (S) selbst während des Vorbeilaufens abgestrahlte Licht ist.

4. Optisches Verfahren zum Erkennen von Defekten eines vorbeilaufenden Warmerzeugnisses (S) nach einem der Ansprüche 1 bis 3, **dadurch gekennzeichnet, dass** das den Teil der Bilder mit der Wellenlänge im sichtbaren Spektrum bildende Licht ein zusätzliches Beleuchtungslicht gelber, grüner oder blauer Farbe ist, das auf die Oberfläche des vorbeilaufenden Erzeugnisses geworfen wird.

5. Optisches Verfahren zum Erkennen von Defekten eines vorbeilaufenden Warmerzeugnisses (S) nach Anspruch 4, **dadurch gekennzeichnet, dass** das zusätzliche Beleuchtungslicht von grüner Farbe ist.

6. Optisches Verfahren zum Erkennen von Defekten eines vorbeilaufenden Warmerzeugnisses (S) nach einem der Ansprüche 1 bis 5, **dadurch gekennzeichnet, dass** die von den Erfassungsvorrichtungen stammenden Lichter auf den Graupegel hin analysiert werden.

7. Optisches Verfahren zum Erkennen von Defekten eines vorbeilaufenden Warmerzeugnisses (S) nach Anspruch 8, **dadurch gekennzeichnet, dass** die Erfassung der Bilder zueinander und mit dem Vorrücken des vorbeilaufenden Erzeugnisses synchronisiert erfolgt, so dass die erfassten Defekte bezüglich der Länge des Erzeugnisses (S) lokalisiert werden können.

8. Optische Vorrichtung (1) zum Erkennen von Defekten eines vorbeilaufenden Warmerzeugnisses (S) mit Mitteln zum Abbilden, Erfassen (C1, C2, C3) und Verarbeiten von Bildern des Erzeugnisses, welche die Analyse von Bildern gestatten, die aus Licht bestehen, dessen Wellenlängenspektrum zu einem Teil im Infrarotbereich und zu einem weiteren Teil im sichtbaren Spektrum liegt, wobei die für jedes Lichtspektrum sensiblen Sensoren (C1, C2, C3) lineare Sensoren sind, die in einer gleichen Kamera (4) eingebaut sind und das gleiche Objektiv (L) verwenden, wobei deren jeweilige Achse parallel zur Sichtlinie (V', V) verläuft, wobei die Sensoren in verschiedenen Brennebenen (P_{B}, P_{G}, P_{R}) liegen und den Bildverarbeitungsmitteln ein Defekterfassungssignal bereitstellen.

9. Optische Vorrichtung (1) zum Erkennen von Defekten eines vorbeilaufenden Warmerzeugnisses (S) nach Anspruch 8, **dadurch gekennzeichnet, dass** die für die verschiedenen Wellenlängenspektren sensiblen Sensoren (C1, C2, C3) an einen zur optischen Achse (X'X) des Objektivs (L) der Kamera (4) geneigten Träger montiert sind.

10. Optische Vorrichtung (1) zum Erkennen von Defekten eines vorbeilaufenden Warmerzeugnisses (S) nach Anspruch 8, **dadurch gekennzeichnet, dass** die für die verschiedenen Wellenlängenspektren sensiblen Sensoren (C1, C2, C3) an einen gestuften Träger (7) montiert sind, so dass sie in Richtung der optischen Achse (X'X) des Objektivs (L) der Kamera (4) versetzt sind.

11. Optische Vorrichtung (1) zum Erkennen von Defekten eines vorbeilaufenden Warmerzeugnisses (S) nach einem der Ansprüche 8 bis 10, **dadurch gekennzeichnet, dass** die Mittel zum Abbilden, Erfassen und Verarbeiten von Bildern des Erzeugnisses das von dem Erzeugnis (S) selbst abgestrahlte Infrarotlicht und das von den zusätzlichen Beleuchtungsmitteln (2) abgestrahlte Licht gelber, grüner oder blauer Farbe, das auf die Oberfläche des vorbeilaufenden Erzeugnisses geworfen wird, zuordnen.

12. Optische Vorrichtung (1) zum Erkennen von Defekten eines vorbeilaufenden Warmerzeugnisses (S) nach Anspruch 11, **dadurch gekennzeichnet, dass** das von den zusätzlichen Beleuchtungsmitteln (2) abgestrahlte Licht von grüner Farbe ist.

13. Optische Vorrichtung (1) zum Erkennen von Defekten eines vorbeilaufenden Warmerzeugnisses (S) nach einem der Ansprüche 11 oder 12, **dadurch gekennzeichnet, dass** die zusätzlichen Beleuchtungsmittel (2) aus LED-Dioden bestehen.

14. Optische Vorrichtung (1) zum Erkennen von Defekten eines vorbeilaufenden Warmerzeugnisses (S) nach einem der vorangehenden Ansprüche, **dadurch gekennzeichnet, dass** sie Mittel (3) zum Schutz und Mittel (6) zum Abkühlen der Bilderfassungsmittel enthält.

15. Optische Vorrichtung (1) zum Erkennen von Defekten eines vorbeilaufenden Warmerzeugnisses (S) nach Anspruch 14, **dadurch gekennzeichnet, dass** die Beleuchtungsmittel (2) in den gleichen Schutzmitteln (3) wie die Bilderfassungsmittel (4) integriert sind.
